Europäisches Patentamt

European Patent Office

Office européen des brevets

(11) Publication number: **0 081 996**
**B1**

# (12) EUROPEAN PATENT SPECIFICATION

(45) Date of publication of patent specification: 05.10.88

(51) Int. Cl.⁴: **F 02 C 3/30, F 02 C 7/16**

(21) Application number: **82306607.1**

(22) Date of filing: **10.12.82**

(54) **Regenerative gas turbine cycle.**

(30) Priority: 10.12.81 JP 199362/81
10.12.81 JP 199364/81

(43) Date of publication of application:
22.06.83 Bulletin 83/25

(45) Publication of the grant of the patent:
05.10.88 Bulletin 88/40

(84) Designated Contracting States:
DE FR GB IT

(56) References cited:
EP-A-0 001 569
EP-A-0 051 493
EP-A-0 053 045
CH-A- 318 979
CH-A- 457 039
DE-C- 665 607
DE-C- 717 711
DE-C- 718 197
FR-A-1 007 140
FR-A-1 010 954
FR-A-1 568 871
US-A-2 115 338
US-A-2 678 532

(73) Proprietor: **MITSUBISHI GAS CHEMICAL COMPANY, INC.**
5-2, Marunouchi 2-chome Chiyoda-Ku
Tokyo (JP)

(72) Inventor: **Nakamura, Hiromi**
2-12-17, Nishiyama
Kashiwa-shi Chiba-ken (JP)
Inventor: **Takahashi, Takehiko**
20-9, Nishikubo-cho
Tokiwadaira Matsudo-shi Chiba-ken (JP)
Inventor: **Yamamoto, Kazuo**
94-2, Kamadai-cho
Hodogaya-ku Yokohama-shi Kanagawa-ken (JP)
Inventor: **Sayama, Norio**
15-6, Nishikubo-cho
Tokiwadaira Matsudo-shi Chiba-ken (JP)
Inventor: **Narazaki, Norio**
1001-10, Nakahara Shimojuku
Hiratsuka-si Kanagawa-ken (JP)

(74) Representative: **Coleman, Stanley et al**
MATHYS & SQUIRE 10 Fleet Street
London EC4Y 1AY (GB)

Courier Press, Leamington Spa, England.

## Description

Field of the invention

The present invention relates to a water injection type regenerative gas turbine cycle.

As will be later explained, the gas turbine cycle on the principle of this invention can provide thermal efficiency higher than 49% lower heating value at a turbine inlet temperature of 1,000°C, under the practical conditions. This means an increase in thermal efficiency to approximately twice that for a conventional simple gas turbine cycle, with a corresponding reduction of 50% in fuel consumption.

Background of the invention

Conventionally, the heat of the turbine exhaust gas in a gas turbine cycle has been recovered by the preheating of air or withdrawal of refrigerative energy by means of an absorbent type refrigerant or by generating of steam in a waste heat boiler. In addition, in some prior art gas turbine cycles, preheating of air is carried out by forming an air/steam mixture which is obtained by injection of water into compressed air.

The following documents teach the regenerative gas turbine cycle of the water injection type; The United States Patents No. 2095991, No. 2115112, No. 2115338, No. 2678532 and No. 2869324, Swiss Patent No. 457039, and French Patent No. 1007140.

Other documents reporting on these patents include "Gas Turbines with Heat Exchanger and Water Injection in the Compressed Air", Combustion Vol. 44, No. 6, Dec. 1972, p. 32—40, by N. Gasparovic et al. (hereinafter referred to as report A) and Combustion Vol. 45, No. 6, Dec. 1973, p. 6—16 (hereinafter referred to as report B).

Each of the above-mentioned patents discloses the method of heat recovery by the use of a compressed air/steam mixture with a description of a process of injected water being mixed with the compressed air or with the compressed air at an intermediate stage in the compression thereof. Reports A and B state in reference to these patents that the increase in thermal efficiency attainable with each of them has been proved to be about 1.5 times that for a conventional simple gas turbine cycle in spite of great increase in the specific power. These achievements are not very satisfactory; rather they are poor from the viewpoint of the utility and practicability of general power generation as reflected in the concept of a combined cycle of gas turbine and steam turbine. With the recent sky-rocketing increases in fuel prices (by 20 times in 10 years), the direction of the development of a more effective power generating plant capable of a significant increase in thermal efficiency has taken a turn toward the possibility of embodying a combined cycle of gas turbine and steam turbine.

The applicants of the present invention have found that in the water injection type regenerative gas turbine cycle an increase of thermal efficiency is achieved by the system in which heat recovery of turbine exhaust gas is carried out by a multiphase compressed air/water/steam mixture which is obtained by injection of water into a part of or the whole of the compressed air and intercooling of the compressor is accomplished by this water, and filed several applications such as Japanese patent public disclosure (KOKAI), No. 57—079225 on the basis of the above discovery.

Further studies of the manner of water injection, heat recovery, and the method of production of the cooling medium have led to the additional development of the above mentioned regenerative gas turbine cycle. The improved cycle employs contact operating means such as an exchanging tower in which direct contact between the compressed air and heated water used as a heat recovering medium occur so that both heat and mass transfer is carried out, said liquid phase cooled water not converted to steam by the contact being used as heat recovering medium for heat recovery of turbine exhaust gas and intercooling of the compressor, and make-up water corresponding to the amount of water which contacts the compressed air and evaporates to transform into steam constituting the mixture is also used for intercooling of the compressor, and, most important, further cooling (hereinafter referred to as "after-cooling) of the compressed air for the contact operation is carried out by a portion of the water which is cooled in the contact operation. This cycle has been found to achieve an increase of thermal efficiency and is presented in this invention. It has also been proved that the values of thermal efficiency obtainable by this cycle are higher as compared with those expected of the above mentioned combined reheat cycle of gas turbine and steam turbine.

In more detail, the present invention consists in a method of operation of a regenerative gas turbine cycle in which heat recovery is carried out by a mixture of gas/steam, said gas comprising air, which mixture is obtained by contact between water and the air which has been compressed by a compressor said mixture being used as a combustion supporting gas, whereby the mixture of air/steam together with cooled water is obtained through contact between the compressed air and heated water, said cooled water being used as heat recovering medium for heat recovery from the turbine exhaust gas, and make-up water is supplied corresponding to the amount of water which contacts the compressed air and is lost by evaporation, and water being added to the liquid phase water used for contact and/or heat recovery as it is or after being used as a heat recovery medium, characterised in that after-cooling of the compressed air which is discharged from a final compressor stage and is used for the contact operation, is carried out by only a portion of the cooled water which is obtained in the contact operation and resultant heated water is used for the contact operation.

According to the present invention, as has been described above, in the regenerative cycle a portion of the water that has been cooled by the contact between the heated water and the compressed air is used for after-cooling of the compressed air for the contact operation so that water at lowest possible temperature can be obtained and better heat recovery in the regenerator is accomplished.

The present invention differs from the prior art of DE—C—717 711 in that the after-cooling of the compressor gas in this specification is effected from a water supply the heat absorbed in which from the compressor air is not further utilised. By contrast in the present invention the heat extracted from the compressor air is extracted by water from the contact operation which is not converted in that operation to steam and that water after heating thereof by the compressor air is returned together with make-up water for use in the contact operation.

US—A—2.115.338 discloses a cycle in which heat recovered from the compressor air by water converts that water to steam for power generation in a steam turbine whilst further cooling of the compressor gas is effected by evaporation of water therein. There is no water surplus to this evaporation of water therein. There is no water surplus to this evaporation, as there is in the present invention which, together with make-up water to replenish evaporated water, is used for after-cooling the compressed air and thereafter is used in the contact operation.

Detailed explanation of the invention

A preferred embodiment of this invention will hereinafter be described in conjunction with the flowsheet of the attached drawing.

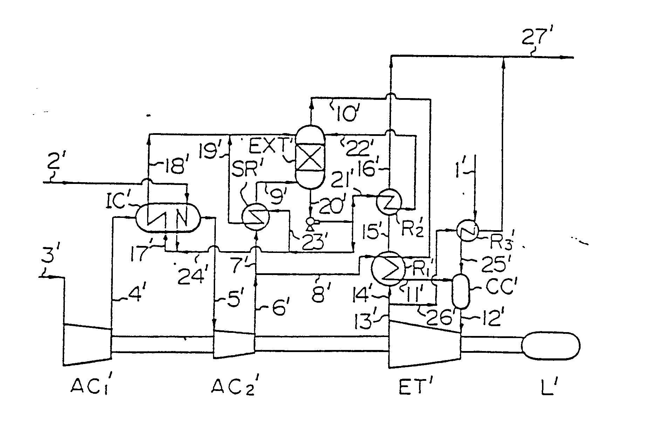

Figure 1 is a flowsheet representing a gas turbine cycle in accordance with the present invention and comprises a contact type heat exchanging tower (hereinafter called the exchanging tower) intended to allow the compressed air of the compressors to contact the water therein, three regenerators, a heat exchanger (hereinafter called the after-cooler) intended to cool the compressed air which is being used for the contact operation, an intercooler, two compressors, and a turbine.

Referring to Figure 1, ambient air (3') is taken in by the first air compressor (AC'$_1$) in which the air undergoes adiabatic compression for admission to the intercooler (IC') through a conduit (4'). The air, after being cooled by the cooling water in conduit (17') in the intercooler which receives water (24') from the exchange tower (EXT') while being replenished by a pressurized water pipe (2'), and then being also cooled by the replenishing water pipe (2') itself, is admitted through a conduit (5') to the second air compressor (AC'$_2$) in which the air, after being subjected to further adiabatic compression, is converted to compressed air which is passed through conduit (6'). A portion of the compressed air in conduit (6') is, as required, routed to the high temperature regenerator (R'$_1$) by way of a conduit (8'). The remaining compressed air is introduced through a conduit (7') to the after-cooler (SR') for precooling and, leaving the after-cooler, is introduced into the exchanging tower by way of a conduit (9'). The exchanging tower (EXT') is designed to receive water that is used as heat recovering medium in regenerative cycles and has been heated from the regenerator (R'$_2$), the after-cooler (SR'), and the intercooler (IC'), respectively, by way of conduits (22'), (19') and (18'). This heated water is in this exchanging tower allowed to contact the compressed air in the manner of counterflow so as to produce a compressed air/steam mixture in which the partial pressure of steam is increased for admission to the high temperature regenerator (R'$_1$) through conduit (10'). The part of the water which has been cooled by the contact operation is routed through a conduit (20') to the after-cooler (SR'), the regenerator (R'$_2$), and the intercooler (IC'), respectively through conduits (23') (21') and (24') and, after being heated at those locations, is recycled to the exchanging tower (ExT'). The compressed air/steam mixture introduced into the high temperature regenerator (R'$_1$) performs heat absorption there together with compressed air supplied, as required, directly from the compressor (AC'$_2$) through the conduit (8'), and is admitted to the combustion chamber (CC') by way of a conduit (11'). To the combustion chamber (CC') is also introduced through a conduit (25') fuel (1') that is preheated by the regenerator (R'$_3$). The combustion chamber burns fuel and compressed air to supply combustion gas, heated as required, to the turbine (ET') through a conduit (12'). The combustion gas undergoes an adiabatic expansion in the expansion turbine (ET') powering the first and the second air compressors (AC'$_1$) and (AC'$_2$) and the load (L') to which the turbine is connected, and are finally discharged as exhaust gas through a conduit (13). A portion of the exhaust gases is routed through a conduit (26') to the regenerator (R'$_3$) for preheating the fuel. The remaining exhaust gases are passed through a conduit (14') first to the high temperature regenerator (R'$_1$) and then through a conduit (15') to the low temperature regenerator (R'$_2$) in both of which the exhaust gases give off their heat for heat transfer. The exhaust gas is discharged as waste gas (27') through a conduit (16').

The gas, after leaving the regenerators, turns to low temperature waste gas. It is to be noted that the design of a gas turbine should require the additional use of sealing air for the air compressors (AC'$_1$) and (AC'$_2$), and the turbine (ET') and of cooling air to cool the turbine (ET'). However, since the gas turbine cycle according to the present invention can produce compressed air at low temperature, it is possible to reduce the amount of the compressed air used for cooling the turbine to a larger extent than is possible with conventional gas turbine cycles. This is an additional feature of this invention that serves to further enhance the thermal efficiency of the gas turbine cycle.

As is apparent from the above description of a preferred embodiment of the present invention made in conjunction with the flowsheet, the gas turbine cycle provides not only for heat recovery of the turbine exhaust gas but also for after-cooling of the compressed air for the contact operation by the water which is obtained by the contact between the water and a part of or the whole of the compressed air. Various modifications are possible without departing from the principle of the method, for example, the use of fuel as well as water as the cooling medium for intercooling, operation on the principle of a reheat cycle, two stage operation in the exchange tower, and the addition of a condenser to recover water contained in the water gas.

When the fuel is a gaseous or volatile liquid, another exchanging tower in addition to the exchanging tower (EXT' shown in Figure 1) may be employed. In this case, a portion of the heated water resulting from the heat recovery operation is introduced in this additional exchanging tower at its upper portion and the fuel in a gaseous phase is introduced in the same at its lower portion so that they contact each other in the manner of counterflow. The mixture of the gaseous fuel and the steam obtained from this contacting operation is extracted from the top of the additional exchanging tower and it is fed directly or after being used as a heat recovering medium to the combustion chamber CC'. On the other hand, the cooled water extracted from the bottom of the additional exchanging tower is recycled as a heat recovering medium. In addition, the gas turbine of this invention provides a desirable relationship between thermal efficiency and cycle pressure ratio, that is to say, in a higher cycle pressure ratio it provides a lower rate of reduction of the thermal efficiency compared with the conventional gas turbine cycle. In addition, the advantages are greater in a reheat cycle or at high levels of specific power.

Although the principle of the regenerative gas turbine cycle of this invention has been discussed with the aid of flowsheets representing preferred embodiments, it is necessary for practical purposes to determine the range of amount of the compressed air and the water within which best use of the effect of heat and mass transfer as a result of the contact of water with compressed air can be made. It may seem desirable, if viewed in the interest of the highest ratios of heat recovery attainable, to use more than 60%, preferably more than 90% of the compressed air, or even all the compressed air (100%) for the contact operation with the water to thereby cool the latter. However, because of the following limitations, for example, i) the given amount of cooled water to be used as the cooling medium for heat recovery in the after-cooler, the lower temperature regenerator and the inter-cooler, ii) the size of device which is practical for use in such contacting operation, and iii) the temperature of the turbine exhaust gas, a desired amount of the compressed air may be by-passed to the high temperature regenerator. It is also necessary to determine the amount of the water which contacts compressed air so as to form a compressed air/steam mixture and is lost by evaporation, which is the amount of water needed to replenish the regenerative cycle. The amount of the water normally is between 0.1—0.4 Kg-mole for 1 Kg-mole of the air intake.

These optimum amounts or ranges of the water and the compressed air may vary with the conditions of the variations of this invention, such as; the use of fuel as the cooling medium for inter-cooling in addition to the water, operation on the principle of a reheat cycle, and the addition of a condenser to recover water contained in the waste gas, and, the turbine inlet operating condition.

For example, in the embodiment illustrated in Figure 1 with turbine inlet operating conditions of 6 ata and 1,000°C, the optimum amount of the water for blending with the compressed air lies in the range of between from 0.1 to 0.2 Kg-mole, or more preferably, between from 0.12 to 0.16 Kg-mole per 1 Kg-mole of the air intake. In addition, the problem of pressure distribution in the compressors before and after the stage of intercooling may be considered in the light of the intercooling effect to help reduce the compressor driving power.

The following table gives an example to provide a concrete picture of the advantages of the present invention.

Example: (referred to the embodiment illustrated in Figure 1)
(I) Conditions
(a) Efficiencies

| | |
|---|---|
| Compressor adiabatic efficiency | $\eta_C=0.89$ |
| Turbine adiabatic efficiency | $\eta_T=0.91$ |
| Mechanical efficiency | $\eta_m=0.99$ |
| Generator efficiency | $\eta_G=0.985$ |
| Combustion efficiency | $\eta_B=0.999$ |

(b) Ambient air conditions at compressor inlet

| | |
|---|---|
| Temperature | 15°C |
| Pressure | 1.033 ata. |
| Relative humidity | 60% |
| Flow rate $\left.\begin{array}{l}\text{dry air}\\ H_2O\end{array}\right\}$ | 1 Kg-mole/sec.<br>0.0101 Kg-mole/-sec. |

(c) Fuel

| | |
|---|---|
| Kind | Natrual gas |
| Temperature | 15°C |
| High heating value (0°C) | 245,200 kcal/-Kg-mole |
| Low heating value (0°C) | 221,600 kcal/-Kg-mole |

(d) Total pressure loss          15.2%

(e) Replenishing water

| | |
|---|---|
| Temperature | 15°C |

Fow rate                  0.132 Kg/mole/-
                          sec.

(f) Turbine inlet conditions
    Pressure              6 ata.
    Temperature           1,000°C

(g) Minimum temperature difference for heat-
exchanger
    High temperature regene-
        rator $R'_1$      30°C
    Low temperature regener-
        ator $R'_2$       20°C
    Fuel preheater $R'_3$ 30°C
    Intercooler IC'       20°C
    After-cooler SR'      20°C

(h) Miscellaneous
    The compressive forces of the fuel, replenishing water and water at the bottom of the exchanging tower are assumed to be negligible while the total auxiliary power is taken as 0.3 percent of the generator output. Further, as to the cooling air for the turbine, the availability of low temperature compressed air in the regenerative gas turbine cycle is taken into account to determine its required amount.

(II) Results.
(a) Waste gas
    Temperature           82.7°C
    Flow rate             1.15 Kg-mole/sec.

(b) Compressor outlet
    temperature (AC₂)     148°C

(c) Sending end power
    output                8690 KW

(d) Sending end thermal
    efficiency(LHV)       50.2%

## Claims

1. A method of operation of a regenerative gas turbine cycle in which heat recovery is carried out by a mixture of gas/steam, said gas comprising air, which mixture is obtained by contact between water and the air which has been compressed by a compressor, said mixture being used as a combustion supporting gas, whereby the mixture of air/steam together with cooled water is obtained through contact between the compressed air and heated water, said cooled water being used as heat recovering medium for heat recovery from the exhaust gas of the turbine (ET'), thus becoming at least part of said heated water and make-up water is supplied corresponding to the amount of water which contacts the compressed air and is lost by evaporation, said water being added to the liquid phase water used for contact and/or heat recovery as it is or after being used as a heat recovery medium, characterised in that after-cooling of the compressed air for the contact operation is carried out by a portion of the cooled water which is obtained in the contact operation and resultant heated water is used together with the heated water from the heat recovery for the contact operation.

2. The method according to Claim 1, further including the step of inter-cooling of the air compressed by the compressor by a part of the cooled water obtained through the contacting operation.

3. The method according to Claim 2, characterised in that the make-up water is supplied in such a way that it further cools the compressed air which has been cooled by said part of the cooled water.

4. The method according to Claim 1, characterised in that the amount of the compressed air for the contact operation is between 60—100% of the compressor air intake.

5. The method according to Claim 1, characterised in that the amount of the compressed air for the contact operation is between 90—100% of the compressor air intake.

6. The method according to Claim 1, characterised in that the cooled water remaining after the contact operation which is used for heat recovery of the turbine exhaust gas is between 20—60% of the total cooled water.

7. The method according to Claim 1, characterised in that the cooled water remaining after the contact operation which is used for heat recovery of the turbine exhaust gas is between 20—45% of the total cooled water.

8. The method according to Claim 1, characterised in that the amount of make-up water to be added to the water is between 0.1—0.4 kg-mole for 1 kg-mole of the air intake.

9. The method according to Claim 1, characterised in that heat recovery is also carried out by fuel.

10. The method according to Claim 9, characterised in that said fuel is gas or volatile liquid and the additional heat recovery is carried out by the mixture of fuel/steam.

11. The method according to Claim 10, characterised in that said fuel is natural gas.

## Patentansprüche

1. Betriebsverfahren für einen regenerativen Gasturbinenarbeitszyklus, bei dem eine Wärmerückgewinnung mittels eines Gas/Dampf-Gemisches erfolgt, das Gas aus Luft besteht, das Gemisch durch Kontakt zwischen Wasser und der Luft, die durch einen Verdichter verdichtet worden ist, erhalten wird und das Gemisch als verbrennungsstützendes Gas benutzt wird, wobei das Luft/Dampf-Gemisch zusammen mit gekühltem Wasser durch Kontaktierung zwischen der verdichteten Luft oder Druckluft und erwärmten Wasser erhalten wird, das gekühlte Wasser als Wärmerückgewinnungsmedium für Wärmerückgewinnung aus dem Abgas der Turbine (ET') benutzt und damit zumindest zu einem Teil des erwärmten Wassers wird, und Nachfüllwasser entsprechend der Menge an Wasser, welche die Druckluft kontaktiert und durch Verdampfung verlorengeht, zugespeist wird, (und) das Wasser dem für Kontaktierung und/oder Wärmerückgewinnung benutzten Flüssigphasenwasser so, wie es ist, oder nach der Verwendung als Wärmerückgewinnungsmedium hinzugefügt wird, dadurch gekennzeichnet, daß ein Nachkühlen der Druckluft für die Kontaktierungsoperation mittels eines Anteils des gekühlten Wassers durchgeführt wird, das in der Kontaktierungsoperation erhalten wird, und das resultierende erwärmte Wasser zusammen mit dem erwärmten Wasser von der Wärmerückgewinnung für die Kontaktierungsoperation benutzt wird.

2. Verfahren nach Anspruch 1, gekennzeichnet durch den Schritt des Zwischenkühlens der durch den Verdichter verdichteten Luft mittels eines Teils des bei der Kontaktierungsoperation erhaltenen gekühlten Wassers.

3. Verfahren nach Anspruch 2, dadurch gekennzeichnet, daß das Nachfüllwasser so zugespeist wird, daß es die durch den genannten Teil des gekühlten Wassers abgekühlte Druckluft weiter abkühlt.

4. Verfahren nach Anspruch 1, dadurch gekennzeichnet, daß die Druckluftmenge für die Kontaktierungsoperation zwischen 60% und 100% der Verdichter-Luftansaugmenge liegt.

5. Verfahren nach Anspruch 1, dadurch gekennzeichnet, daß die Druckluftmenge für die Kontaktierungsoperation zwischen 90% und 100% der Verdichter-Luftansaugmenge liegt.

6. Verfahren nach Anspruch 1, dadurch gekennzeichnet, daß die nach der Kontaktierungsoperation für die Wärmerückgewinnung aus dem Turbinenabgas verbleibende Menge an gekühltem Wasser im Bereich von 20—60% der Gesamtmenge an gekühltem Wasser liegt.

7. Verfahren nach Anspruch 1, dadurch gekennzeichnet, daß die nach der Kontaktierungsoperation für die Wärmerückgewinnung aus dem Turbinenabgas verbleibende Menge an gekühltem Wasser im Bereich von 20—45% der Gesamtmenge an gekühltem Wasser liegt.

8. Verfahren nach Anspruch 1, dadurch gekennzeichnet, daß die Menge des dem Wasser zuzugebenden Nachfüllwassers im Bereich von 0,1—0,4 kg-Mol pro 1 kg-Mol der Luftansaugmenge liegt.

9. Verfahren nach Anspruch 1, dadurch gekennzeichnet, daß die Wärmerückgewinnung auch mittels Brennstoffs erfolgt.

10. Verfahren nach Anspruch 9, dadurch gekennzeichnet, daß der Brennstoff ein Gas oder eine flüchtige Flüssigkeit ist und die zusätzliche Wärmerückgewinnung mittels des Gemisches aus Brennstoff und Dampf erfolgt.

11. Verfahren nach Anspruch 10, dadurch gekennzeichnet, daß der Brennstoff Erdgas ist.

**Revendications**

1. Méthode d'opération d'un cycle de turbine à gaz avec régénération où la récupération de chaleur est effectuée par un mélange de gaz/vapeur, ledit gaz comprenant de l'air, lequel mélange est obtenu par contact entre de l'eau et de l'air qui a été comprimé par un compresseur, ledit mélange étant utilisé comme gaz de support de combustion, ainsi le mélange d'air/vapeur avec l'eau refroidie est obtenu par contact entre l'air comprimé et l'eau chauffée, ladite eau refroidie étant utilisée comme fluide de récupération de chaleur pour la récupération de la chaleur des gaz d'échappement de la turbine (ET'), pour ainsi faire au moins partie de ladite eau chauffée, et l'eau d'appoint est fournie pour correspondre à la quantité d'eau qui contacte l'air comprimé et est perdue par évaporation, ladite eau étant ajoutée à l'eau en phase liquide utilisée pour le contact et/ou la récupération de chaleur telle qu'elle est ou après avoir été utilisée comme fluide de récupération de chaleur, caractérisée en ce qu'un poste-refroidissement de l'air comprimé pour l'opération de contact est effectué par une portion de l'eau refroidie qui est obtenue dans l'opération de contact et l'eau chauffée résultante est utilisée avec l'eau chauffée du récupérateur de chaleur pour l'opération de contact.

2. Méthode selon la revendication 1, comprenant de plus l'étape de refroidissement intermédiaire de l'air comprimé par le compresseur par une partie de l'eau refroidie obtenue par l'opération de contact.

3. Méthode selon la revendication 2, caractérisée en ce que l'eau d'appoint est fournie de manière à refroidir de plus l'air comprimé qui a été refroidi par ladite partie de l'eau refroidie.

4. Méthode selon la revendication 1, caractérisée en ce que la quantité d'air comprimé pour l'opération de contact est comprise entre 60—100% de l'air à l'entrée du compresseur.

5. Méthode selon la revendication 1, caractérisée en ce que la quantité de l'air comprimé pour l'opération de contact est comprise entre 90—100% de l'air à l'entrée du compresseur.

6. Méthode selon la revendication 1, caractérisée en ce que l'eau refroidie restant après l'opération de contact, que l'on utilise pour la récupération de chaleur du gaz à l'échappement de la turbine est comprise entre 20 et 60% de l'eau refroidie totale.

7. Méthode selon la revendication 1, caractérisée en ce que l'eau refroidie restant après l'opération de contact, que l'on utilise pour la récupération de chaleur du gaz d'échappement de la turbine est comprise entre 20 et 45% de l'eau refroidie totale.

8. Méthode selon la revendication 1, caractérisée en ce que la quantité d'eau d'appoint à ajouter à l'eau est comprise entre 0,1 et 0,4 kg-mole pour 1 kg-mole de l'air à l'entrée.

9. Méthode selon la revendication 1, caractérisée en ce que la récupération de chaleur est également effectuée par le combustible.

10. Méthode selon la revendication 9, caractérisée en ce que ledit combustible est du gaz ou un liquide volatil et la récupération de chaleur additionnelle est effectuée par le mélange de combustible/vapeur.

11. Méthode selon la revendication 10, caractérisée en ce que ledit combustible est du gaz naturel.